Europäisches Patentamt

European Patent Office

Office européen des brevets

(11) Publication number: 0 299 548 A2

(12) # EUROPEAN PATENT APPLICATION

(21) Application number: 88201246.1

(22) Date of filing: 17.06.88

(51) Int. Cl.4: D04B 1/22

(30) Priority: 14.07.87 US 73026

(43) Date of publication of application:
18.01.89 Bulletin 89/03

(84) Designated Contracting States:
DE FR GB IT SE

(71) Applicant: BENTLEY-HARRIS
MANUFACTURING CO.
241 Welsh Pool Road
Lionville Pennsylvania 19353(US)

(72) Inventor: Moyer, James D.
51 N. Woodmont Drive
Downingtown Pennsylvania 19335(US)

(74) Representative: Newman, Dennis Daniel
Ernest et al
Bowdon House Ashburton Road West
Trafford Park
Manchester M17 1RA(GB)

(54) Wraparound knitted sleeve.

(57) A wraparound knitted sleeve is provided by rib knitting a structure having predetermined spaced apart wales of jersey knit which cause the knitted structure of monofilament fiber to curl at the wales of jersey knit stitch to thereby form interlocking edge portions for holding the wraparound sleeve in position around the substrate or to give the wraparound sleeve a desired cross-sectional configuration. The knitted wraparound sleeve of the present invention can be knit in continuous rolls which can then be cut to desired length and installed by interlocking the opposing interlocking edges. The sleeves are particularly useful for abrasion resistance oversleeving around electrical wires and cables, hoses and the like.

FIG_5

# Wraparound knitted sleeve

## Field of the invention

This invention relates to knitted wraparound sleeves.

## Background of the Invention

Knitted sleeves have been used in gaskets and seals as illustrated in US patent 3,578,764 to Nunnally et al. Other knitted structures have other uses as illustrated by US patent 4,335,589 to Flasher.

Abrasion resistance sleeving is typically made by braiding engineering plastics which provides an expansible sleeve which can be installed over various substrates such as electrical wires and cables, air, water or other hoses, and other substrates which need to be protected from abrasion or other physical abuse. One such product is the EXPANDO self-fitting protective oversleeve made by Bentley-Harris Manufacturing Co., Lionville, PA. Such braided oversleeving has been made in flat configurations and in wraparound configuration.

## Summary of the Invention

This invention provides a wraparound sleeve having a center portion and a first interlocking edge portion on one side of the center portion and an opposing interlocking edge portion on the other side of the center portion comprising:

rib knitted monofilament fiber containing preselected wales of plain jersey knit stitches wherein;
the first interlocking edge portion is formed by at least one wale of plain jersey knit stitch positioned a preselected number of wales from the edge of the sleeve whereby the edge portion of the sleeve is caused to curl inward; and
the opposing interlocking edge portion of the sleeve is formed by at least one wale of opposite plain jersey knit stitch positioned a preselected number of wales from the opposing edge of the sleeve causing the opposing edge portion of the sleeve to curl outwardly; whereby the inwardly curled interlocking edge portion and the opposing outwardly curled interlocking edge portion are adapted to interlock together to form closure means for holding the wraparound sleeve in position around a substrate.

This invention further provides the sleeve wherein the center portion of the sleeve comprises at least one wale of plain jersey knit stitch which causes the sleeve to curl inward bringing the interlocking edge portions toward each other .

This invention further provides the above sleeve wherein the center portion comprises a plurality of separate plain jersey knit stitch areas, each such area comprising at least one wale of plain jersey knit stitch.

This invention further provides the above sleeve wherein adjacent to the opposing interlocking edge portion, and progressing therefrom toward the center portion, the sleeve comprises:

at least one wale of opposite plain jersey knit stitch causing the entire edge portion to curl outwardly; then
at least one wale of rib knit stitch; then
at least one wale of plain jersey knit stitch causing the entire edge portion and adjacent portion to curl inwardly;
thereby forming the opposing interlocking edge portion in at least a partially recessed configuration whereby when interlocked with the first interlocking edge portion the exterior surface of the wraparound sleeve has a lower profile than without the recessed opposing interlocking edge portion.

This invention further provides the above sleeve wherein the center portion of the wraparound sleeve contains a plurality of spaced apart plain jersey knit stitches each at least one wale in width whereby the wraparound sleeve is shaped into a desired configuration.

This invention further provides a method of enclosing a substrate which comprises:

installing around the substrate a wraparound sleeve having a center portion and a first interlocking edge portion on one side of the center portion and an opposing interlocking edge portion on the other side of the center portion comprising:
rib knitted monofilament fiber containing preselected wales of plain jersey knit stitches wherein;
the first interlocking edge portion is formed by at least one wale of plain jersey knit stitch positions a preselected number of wales from the edge of the sleeve whereby the edge portion of the sleeve is caused to curl inward; and

the opposing interlocking edge portion of the sleeve is formed by at least one wale of opposite plain jersey knit stitch positioned a preselected number of wales from the opposing edge of the sleeve causing the opposing edge portion of the sleeve to curl outwardly; whereby the inwardly curled interlocking edge portion and the opposing outwardly curled interlocking edge portion are adapted to interlock together to form closure means for holding the wraparound sleeve in position around a substrate; and

interlocking the first edge portion with the opposing edge portion.

## Brief Description of the Drawings

Figure 1 shows an example of a front and back bed needle arrangement and a knitter to produce an embodiment of the present invention.

Figure 2 is a cross-section end view of an embodiment of the article of the present invention as it is produced on the knitter having a needle configuration of Figure 1.

Figure 3 is a cross-section end view of the article of Figure 2 wherein the interlocking end portions and adjacent portions have been allowed to curl.

Figure 4 is a cross-section end view of an article according to the present invention wherein the interlocking edge portions have been interlocked.

Figure 5 illustrates a preferred embodiment of the present invention comprising an essentially rectangular wraparound sleeve.

Figure 6 illustrates the installation of an article according to the present invention.

## Description of the Invention

The articles of the present invention are articles made by rib knitting monofilament fibers and selectively interspersing in the rib knit preselected wales of jersey knit on either the front or back of the rib knit structure which causes the monofilament rib knit structure to curl inwardly or outwardly at the jersey stitches. The wales of jersey stitch are collectively positioned to form interlocking edge portions on the rib knit structure whereby the interlocking edge portions can be interlocked together to form a wraparound sleeve for positioning around various substrates.

This invention can best be understood by reference to the exemplary embodiments shown in the figures in the attached drawings.

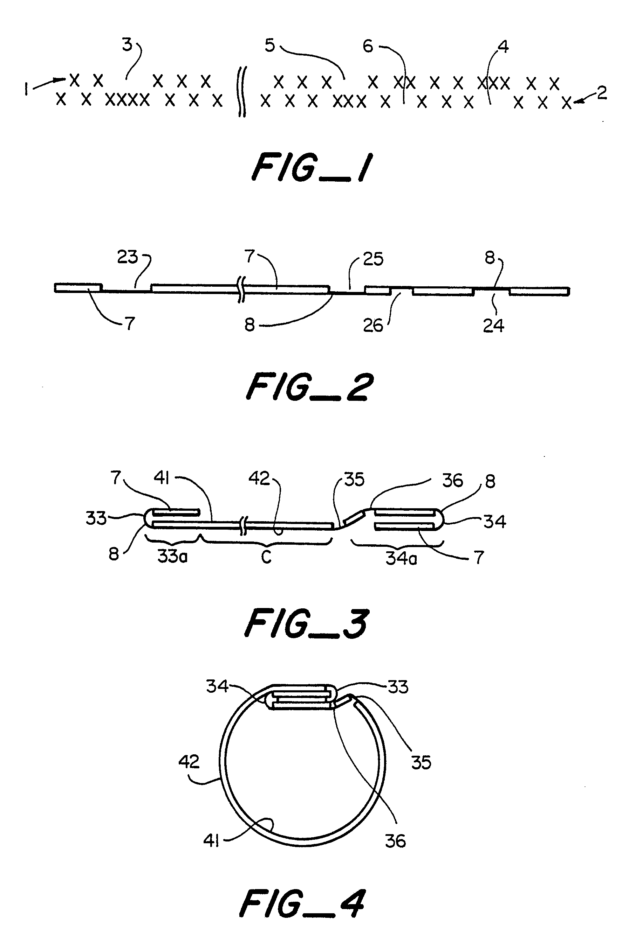

Figure 1 shows a suggested needle array on a flatbed knitter to produce the rib knitted product shown in Figure 2. Needle array 1 on the back bed of the knitter corresponds to the inside surface 41 of the wraparound sleeve shown in Figure 4 and needle arrangement 2 on the front bed of the knitter corresponds to outside surface 42 of the wraparound sleeve shown in Figure 4. In Figure 1 the needle arrangement in area 3 produces a wale of jersey stitch illustrated as area 23 in Figure 2 which causes curl 33 in Figure 3 which produces interlocking end portion 33A in Figure 3. Likewise needle arrangement in area 4 in Figure 1 produces jersey stitch wale or wales 24 in Figure 2 and curl 34 in Figure 3 producing interlocking edge portion 34A in Figure 3. Interlocking edge portion 33A and 34A in Figure 3 can be interlocked as shown in Figure 4 to form a wraparound sleeve when center portion C in Figure 3 is deformed to bring the interlocking edge portions into interlocking configuration as shown in Figure 4.

Figures 1-4 also illustrate an optional and preferable feature of the present invention in that needle arrangements 5 and 6 in Figure 1 produce the wales of jersey stitch 25 and 26 as depicted in Figure 2 which in turn cause curls 35 and 36 shown in Figure 3. Curls 35 and 36 are shown in Figure 4 when edge portions 33A and 34A are interlocked and illustrates how the configuration resulting from curls 35 and 36 produce the wraparound sleeve with the edge portions interlocked having a low profile exterior design.

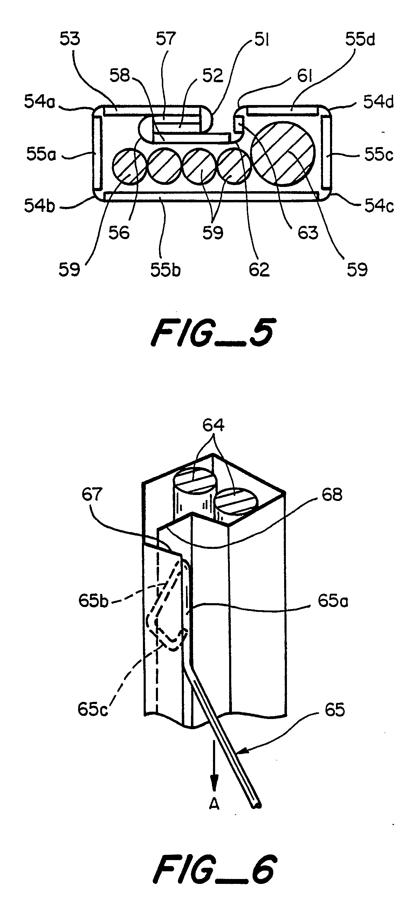

In order to clarify the illustrations in Figures 2, 3, 4 and 5, it should be noted that portions 7 are portions of rib knitted structured and portions 8 are areas of jersey knit stitch wales. This depiction of the articles of the present invention is used in Figures 4 and 5 as well.

Figure 5 illustrates another embodiment of the article of the present invention wherein a rectangular type wraparound sleeve for enclosure of substrates 59 is made as follows. The first interlocking edge portion is made by positioning three wales of jersey knit stitch at position 51 between rib knitted portions 52 and 53. The rectangular portion of the sleeve is formed by having one wale of jersey knit stitch in locations 54A, 54B, 54C and 54D adjacent to rib knit portions 55A, 55B, 55C and 55D. The opposing interlocking edge portion is created by inserting three wales opposite jersey knit stitch at area 56 between rib knit portions 57 and 58. The reverse or opposite jersey knit stitch 56 causes the edge portion to curl outward to form the opposing interlocking edge portion to interlock with edge portion formed from jersey knit stitch area 51 and rib knit areas 52 and 53. The low exterior profile is formed by inserting one wale of jersey knit stitch at 61 and one wale of opposite jersey knit stitch at 62 with two or more wales of rib knit 63 positioned between jersey knit stitch wales 61 and 62.

The above configurations are exemplary of the embodiments encompassed by the present invention as will be appreciated by one skilled in the art. Numerous configurations of wraparound knitted sleeve products can be formed utilizing the present invention.

Figure 6 illustrates a simple tool 65 for use in installing a wraparound sleeve according to the present invention around substrates 64. All that is required is to open the first edge portion 67 and opposing edge portion 68 a sufficient amount to cause the two edge portions to interlock together. Tool 65 accomplishes this by opening edge portion 67 and edge portion 68 wherein part 65A of tool 65 is on the outside of edge portion 67. Portion 65B is behind edge portion 67 but in front of edge portion 68 and portion 65C of tool 65 is behind edge portion 68. As tool 65 is moved in direction A edge portion 67 and edge portion 68 will be interlocked together. Various configurations of tools may be used to interlock the edge portions of the wraparound sleeve of the present invention and the installation may be accomplished by interlocking the opposing edge portions with ones fingers.

While it would be possible to form the articles of the present invention on a circular knitter, it is more practical, more economical and preferred to form the articles of the present invention on a flat bed knitter. The wales of plain jersey stitch can be inserted as illustrated above on the front bed or back bed of the knitter to produce the outward or inward curl of the sleeve at the desired point. In general it has been found with most monofilaments that one wale of jersey knit stitch produces approximately a 90° curl in the sleeve and two or three wales of jersey knit stitch, usually preferably three wales, will produce a curl in the sleeve of about 180°. The number of wales of jersey knit stitch necessary or desirable at each curl or curve in the sleeve according to the present invention will depend upon the monofilament fiber being used, the density of the knitting and other factors as will be apparent to one skilled in the art following the teachings of the present invention. Likewise, the number of wales of rib knit necessary or desirable between the wales of jersey knit stitch will be determined by the desired configuration and properties of the wraparound knitted sleeve following the teachings of the present invention. Again, depending on the diameter and properties of the monofilament being knitted, it may be necessary to use four or more wales of jersey knit stitch to obtain the degree of curl in the sleeve which is desired for a particular configuration.

The monofilament fibers used to form the articles of the present invention should have sufficient stiffness and resilience to hold the desired degree of curvature under the desired conditions. The monofilament fibers useful in the present invention may be plastic, metal or other material which provides the desired strength for the interlocking edge portions of the sleeve. In general it is preferred to use monofilament plastic fibers although wire or other materials may be equally useful for the desired purpose. For example, it has been found that a 10 mil polyester monofilament fiber having a flexural modulus in excess of $1 \times 10^6$ is particularly useful in the present invention. However, monofilament fibers having a flexural modulus of at least 100,000, preferably at least 500,000, more preferably at least $1 \times 10^6$, and most preferably at least $1.5 \times 10^6$ are particularly useful in the present invention. Many fibers known as "engineering plastics" are useful in the present invention and include materials such as polyesters, high density polyethylenes, polypropylenes, and other materials known in the prior art capable of being formed into monofilament fibers having a flexural modulus of at least 100,000.

The wraparound knitted sleeves of the present invention can be used to protect substrates from abrasion by making the sleeves from abrasion resistant materials such as polypropylene, polyester, wire and the like. Other uses of the wraparound sleeves of the present invention include use as RFI/EMI shielding wherein it may be desirable to use copper, tin coated copper, nickel, silver, or other materials known for their RIF·EMI utility. Other uses of the wraparound knitted sleeves of the present invention will be apparent to those skilled in the art.

## Claims

1. A wraparound sleeve having a center portion and a first interlocking edge portion on one side of the center portion and an opposing interlocking edge portion on the other side of the center portion comprising:

        rib knitted monofilament fiber containing preselected wales of plain jersey knit stitches wherein;
        the first interlocking edge portion is formed, by at least one wale of plain jersey knit stitch positioned a number of wales from the edge of the sleeve whereby the edge portion of the sleeve is caused to curl inward; and
        the opposing interlocking edge portion of the sleeve is formed by at least one wale of opposite plain jersey knit stitch positioned a preselected number of wales from the opposing edge of the sleeve causing the opposing edge portion of the sleeve to curl outwardly; whereby the inwardly curled interlocking edge portion and the opposing outwardly curled interlocking edge portion are adapted to interlock together to form closure means for holding the wraparound sleeve in position around a substrate.

2. A wraparound sleeve according to claim 1 wherein the center portion of the sleeve comprises at least one wale of plain jersey knit stitch which causes the sleeve to curl inward bringing the interlocking edge portions toward each others.

3. A wraparound sleeve according to claim 2 wherein the center portion comprises a plurality of separate plain jersey knit stitch areas, each such area comprising at least one wale of plain jersey knit stitch.

4. A wraparound sleeve according to claim 1 wherein adjacent to the opposing interlocking edge portion, and progressing therefrom toward the center portion, the sleeve comprises:

at least one wale of opposite plain jersey knit stitch causing the entire edge portion to curl outwardly; then at least one wale of rib knit stitch; then at least one wale of plain jersey knit stitch causing the entire edge portion and adjacent portion to curl inwardly; thereby forming the opposing interlocking edge portion in at least a partially recessed configuration whereby when interlocked with the first interlocking edge portion the exterior surface of the wraparound sleeve has a lower profile than without the recessed opposing interlocking edge portion.

5. Wraparound sleeve according to claim 2 wherein adjacent to the opposing interlocking edge portion and progressing therefrom the sleeve contains:

at least one wale of opposite plain jersey knit stitch causing the entire edge portion to curl outwardly; then at least one wale of rib knit stitch; then at least one wale of plain jersey knit stitch causing the entire edge portion and adjacent portion to curl inwardly; thereby forming the opposing interlocking edge portion in a recessed configuration whereby when interlocked with the first interlocking edge portion the exterior surface of the wraparound sleeve has a lower profile than without the recessed opposing interlocking edge portion.

6. Wraparound sleeve according to claim 3 wherein adjacent to the opposing interlocking edge portion and progressing therefrom the sleeve contains:

at least one wale of opposite plain jersey knit stitch causing the entire edge portion to curl outwardly; then at least one wale of rib knit stitch; then at least one wale of plain jersey knit stitch causing the entire edge portion and adjacent portion to curl inwardly; thereby forming the opposing interlocking edge portion in a recessed configuration whereby when interlocked with the first interlocking edge portion the exterior surface of the wraparound sleeve has a lower profile than without the recessed opposing interlocking edge portion.

7. Wraparound sleeve according to claim 4 wherein the center portion of the wraparound sleeve contains a plurality of spaced apart plain jersey knit stitches each at least one wale in width whereby the wraparound sleeve is shaped into a desired configuration.

8. Wraparound sleeve according to claim 5 wherein the central portion of the wraparound sleeve contains a plurality of spaced apart plain jersey knit stitches each at least one wale in width whereby the wraparound sleeve is shaped into a desired configuration.

9. A wraparound sleeve according to claim 1 wherein the monofilament fiber is a plastic monofilament fiber.

10. A wraparound sleeve according to claim 1 wherein the monofilament fiber is a metallic wire.

11. A method of enclosing a substrate which comprises:

installing around the substrate a wraparound sleeve having a center portion and a first interlocking edge portion on one side of the center portion and an opposing interlocking edge portion on the other side of the center portion comprising: rib knitted monofilament fiber containing wales of plain jersey knit stitches wherein; the first interlocking edge portion is formed by at least one wale of plain jersey knit stitch positioned a preselected number of wales from the edge of the sleeve whereby the edge portion of the sleeve is caused to curl inward; and the opposing interlocking edge portion of the sleeve is formed by at least one wale of opposite plain jersey knit stitch positioned a preselected number of wales from the opposing edge of the sleeve causing the opposing edge portion of the sleeve to curl outwardly; whereby the inwardly curled interlocking edge portion and the opposing outwardly curled interlocking edge portion are adapted to interlock together to form closure means for holding the wraparound sleeve in position around a substrate; and
interlocking the first edge portion with the opposing edge portion.

FIG_1

FIG_2

FIG_3

FIG_4

FIG_5

FIG_6